# EUROPÄISCHE PATENTSCHRIFT

(11) **EP 3 441 657 B1**
(45) Veröffentlichungstag und Bekanntmachung des Hinweises auf die Patenterteilung: **14.04.2021**
(21) Anmeldenummer: 18187418.1
(22) Anmeldetag: 06.08.2018
(51) Int. Cl.: F16L 37/091, F16J 15/46

(54) **ANSCHLUSSVORRICHTUNG FÜR ROHRLEITUNGEN MIT LECKAGEANZEIGE**
CONDUIT CONNECTION FOR PIPING WITH A LEAK INDICATOR
DISPOSITIF DE RACCORDEMENT POUR CONDUITES À INDICATEUR DE FUITE

(30) Priorität: 09.08.2017 DE 102017118162
(43) Veröffentlichungstag der Anmeldung: 13.02.2019
(73) Patentinhaber: Voss Automotive GmbH, 51688 Wipperfürth (DE)
(72) Erfinder: HAGEN, Harald, 51688 Wipperfürth (DE); KLEHR, Adrian, 58809 Neuenrade (DE); WIEDEI, Max-André, 51647 Gummersbach (DE)
(74) Vertreter: Patent- und Rechtsanwälte Dr. Solf & Zapf

(56) Entgegenhaltungen:
- EP-A1- 2 864 685
- EP-A2- 1 840 434
- DE-A1- 1 600 406
- US-A1- 2010 212 579

## Beschreibung

Die vorliegende Erfindung betrifft eine Anschlussvorrichtung für Rohrleitungen mit einem Anschlusskörper mit einer Aufnahmeöffnung für eine mit einem Leitungsende einzusteckende Rohrleitung und ein innerhalb der Aufnahmeöffnung gelagertes Halteelement zum Fixieren des eingesteckten Leitungsendes gegen Herausziehen, wobei der Anschlusskörper ein axiales zweigeteiltes Gehäuse mit einem ersten, in Einsteckrichtung weisenden Gehäuseteil und einem zweiten, eine Mündungsseite der Aufnahmeöffnung aufweisenden hülsenförmigen Gehäuseteil aufweist, die miteinander verbunden sind, wobei innerhalb des hülsenförmigen Gehäuseteils ein hülsenförmiges Löseelement derart axial verschiebbar gelagert ist, dass durch Einwirken auf das Halteelement die Fixierung der eingesteckten Rohrleitung aufgehoben wird, wobei das Löseelement aus einem umfangsgemäß geschlossenen Ringteil besteht, an dem durch Längsschlitze voneinander getrennte Rastarme ausgebildet sind, wobei das Ringteil an seinem äußeren Umfang mittels einer Umfangsdichtung gegen das zweite hülsenförmige Gehäuseteil und an seinem inneren Umfang im Bereich seiner Ringöffnung mittels einer Umfangsdichtung gegen die eingesteckte Rohrleitung abdichtbar ist.

Eine derartige Anschlussvorrichtung ist aus der EP 2 864 685 A1 bekannt. Bei dieser Anschlussvorrichtung ergibt sich das Problem, dass es zu einem fehlerhaften Einstecken der Rohrleitung kommen kann, wenn die Rohrleitung nicht vollständig eingesteckt ist und somit es zu einem Austritt des in der Rohrleitung fließenden Druckmediums kommt, wodurch das gesamte System ausfallen kann. Diese Gefahr ist bei der gattungsgemäßen Anschlussvorrichtung auch deshalb besonders groß, da die Rohrleitung unmittelbar eingesteckt wird, und nur über die Einsteckkraft letztlich festgestellt werden kann, ob die Rohrleitung bis zum Anschlag eingeführt ist.

Der Erfindung liegt die Aufgabe zu Grunde sicherzustellen, dass bestehende Fehlstellungen schon bei einer Inbetriebnahme, z. B. bei einer ersten Druckprüfung schnell aufgefunden werden können.

Erfindungsgemäß wird dies durch die Merkmale des kennzeichnenden Teils des Anspruchs 1 erreicht. Demnach ist im Bereich zwischen dem Halteelement und der äußeren Umfangsdichtung des Ringteils innerhalb der Umfangswandung des zweiten hülsenförmigen Gehäuseteils mindestens ein Durchgangskanal ausgebildet, der einen Innenraum des zweiten Gehäuseteils mit dessen Außenseite verbindet und in einer Umfangsnut mündet, wobei innerhalb der Umfangsnut ein radial elastischer Dichtring angeordnet ist, der eine Mündungsöffnung des Durchgangskanals unmittelbar oder mittelbar abdichtet, wobei der Dichtring derart ausgebildet ist, dass ein im Innern der Anschlussvorrichtung sich aufbauender Innendruck eines im Innern vorhandenen Fluids, wenn die anzuschließende Rohrleitung nur teilweise derart eingesteckt ist, dass keine umfangsgemäße Abdichtung der Rohrleitung im Bereich des ersten Gehäuseteils vorhanden ist, der Dichtring sich derart anhebt, dass eine Abdichtung des Durchgangskanals nach kurzem aufgehoben wird. Erfindungsgemäß wird somit eine Art O-Ring-Ventil erzeugt, das sich durch einen einfachen und kostengünstigen Aufbau auszeichnet. Da der O-Ring von außen sichtbar am Gehäuse montiert ist, ist die fehlerhafte Einsteckstellung auch optisch zu identifizieren. Durch die räumliche Anordnung, dass der Durchgangskanal im Bereich einer radial gerichteten umlaufenden Stufenfläche im Innern des hülsenförmigen Gehäuseteils ausgebildet ist, wird erreicht, dass die Festigkeit des zweiten hülsenförmigen Gehäuseteils durch den radial verlaufenden Durchgangskanal nicht beeinträchtigt wird. Die erfindungsgemäße Ausbildung der Umfangsnut bewirkt einen sicheren Dichtungssitz des Dichtrings, so dass der Eintritt von Schmutz und Flüssigkeit in das Innere der Anschlussvorrichtung sicher vermieden wird. Andererseits ergibt sich hierdurch aber auch eine Verringerung der wirksamen Dichtfläche, so dass ein Abheben des Dichtrings von der Nutoberfläche erleichtert wird. Die erfindungsgemäße Ausbildung des zweiten hülsenförmigen Gehäuseteils und des Dichtrings als Zwei-Komponenten-Spritzgussteil reduziert einerseits die Herstellungs- und Montagekosten und andererseits wird dadurch die Festigkeit des zweiten Gehäuseteils günstig beeinflusst, da die Nuttiefe der Dichtungsnut relativ gering gehalten werden kann und nur im Bereich des Durchgangskanals selbst im Innern desselben die Abdichtung erfolgt, wobei hierdurch die Dichtfunktion gegen äußere Beeinträchtigungen abgeschirmt wird.

Vorteilhafte Ausführungen der Erfindung sind in den Unteransprüchen enthalten und werden anhand der beiliegenden Zeichnungen näher erläutert. Es zeigen:
- Fig. 1: einen Längsschnitt durch eine erste Ausführungsform einer erfindungsgemäßen Anschlussvorrichtung mit voll eingesteckter Rohrleitung,
- Fig. 2: einen Längsschnitt durch die erste Ausführungsform mit nicht voll eingesteckter Rohrleitung,
- Fig. 2a: eine Einzelheit bei Z in Fig. 2,
- Fig. 3: eine weitere erfindungsgemäße Anschlussvorrichtung im Längsschnitt mit voll eingesteckter Rohrleitung,
- Fig. 4: die Ausführungsform gemäß Fig. 3 mit nicht voll eingesteckter Rohrleitung,
- Fig. 5: eine weitere erfindungsgemäße Anschlussvorrichtung im Längsschnitt mit voll eingesteckter Rohrleitung,
- Fig. 6: eine perspektivische Ansicht eines zweiten hülsenförmigen Gehäuseteils gemäß der Anschlussvorrichtung in Fig. 5, und
- Fig. 7: die Anschlussvorrichtung gemäß Fig. 5 mit nicht voll eingesteckter Rohrleitung.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

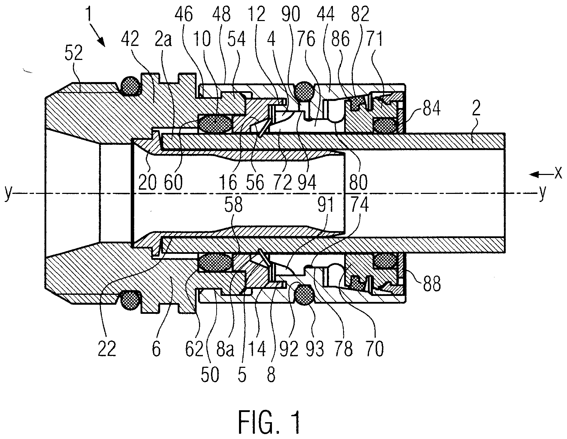

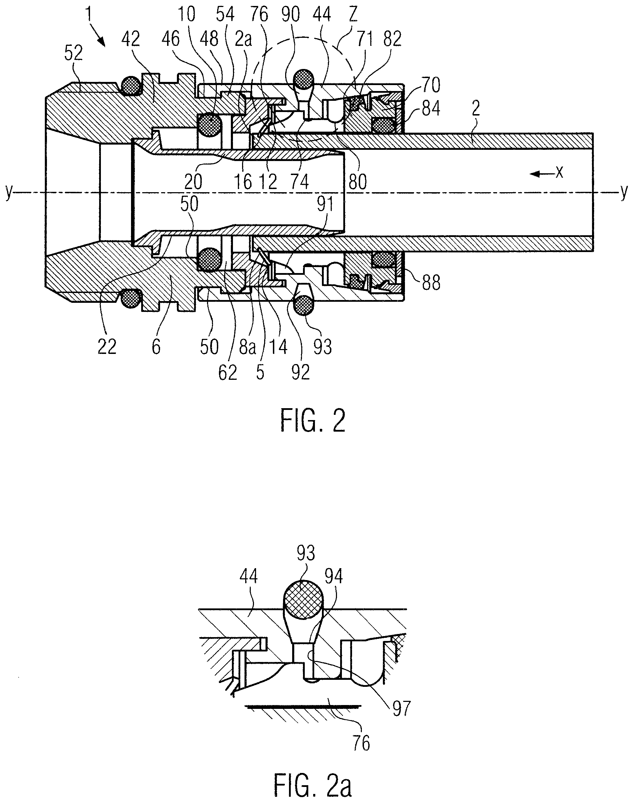

Gemäß Fig. 1 dient eine erfindungsgemäße Anschlussvorrichtung 1 zum schnellen und bevorzugt auch lösbaren Anschluss einer Rohrleitung 2 durch einfaches Einstecken eines Leitungsendes 2a in eine Aufnahmeöffnung 4 eines Anschlusskörpers 6. Die Einsteckrichtung ist in Fig. 1 und 2 jeweils mit einem Pfeil X veranschaulicht. Da somit kein Anschlussdorn zum Aufstecken der Rohrleitung 2 vorhanden ist, kann auch von einem "Dornlos-Stecksystem" gesprochen werden. Zum Arretieren des eingesteckten Leitungsendes 2a gegen Herausziehen ist innerhalb der Aufnahmeöffnung 4 ein Halteelement 5 gelagert, welches insbesondere als federelastischer Zahnring mit einem äußeren Umfangsbereich 8 und mit mehreren über den Umfang verteilt angeordneten, sich radial nach innen und schräg in Einsteckrichtung X geneigt erstreckenden und dadurch widerhakenartig kraft- und/oder formschlüssig gegen die äußere Umfangsfläche des Leitungsendes 2a wirkenden Haltezähnen 8a ausgebildet ist. Zur Abdichtung der eingesteckten Rohrleitung 2 nach außen ist zudem innerhalb des Anschlusskörpers 6 mindestens eine Umfangsdichtung 10 gelagert, die einen radial zwischen dem Leitungsende 2a und dem Anschlusskörper 6 gebildeten Ringspalt nach außen abdichtet.

Der äußere Umfangsbereich 8 des Halterings 5 liegt im unverformten Zustand in einer zur Längsachse Y der Anschlussvorrichtung 1 senkrechten Ebene, während die Haltezähne 8a gemeinsam durch ihre Schrägstellung auf einem Konus liegen. Die Haltezähne 8a definieren mit ihren inneren Haltekanten einen Umkreis, dessen Durchmesser im unverformten Zustand kleiner als der Außendurchmesser der Rohrleitung 2 ist. Dadurch wirken die Haltekanten mit einer radialen Haltekraft insbesondere formschlüssig oder zumindest kraftformschlüssig gegen den Außenumfang des eingesteckten Leitungsendes 2a.

Der Haltering 5 ist erfindungsgemäß mit seinem äußeren Umfangsbereich 8 mit einem definiert begrenzten axialen Bewegungsspiel innerhalb des Anschlusskörpers 6 gelagert. Dieses axiale Bewegungsspiel wird durch beidseitige, axial gegenüberliegende Anlageabschnitte 12 und 14 innerhalb des Anschlusskörpers 6 begrenzt. Weiterhin wirkt der Haltering 5 am winkligen Übergang 15 zwischen dem äußeren Umfangsbereich 8 und den Haltezähnen 8a derart mit einer innerhalb des Anschlusskörpers 6 am radial inneren Umfang der den ersten Anlageabschnitt 12 bildenden radialen Anlagefläche vorgesehenen, umfangsgemäßen Kippkante 16 zusammen, dass beim Einstecken des Leitungsendes 2a durch dessen Anlage an den Haltezähnen 8a der Haltering 5 aus einer mit seinem äußeren Umfangsbereich 8 gegen den ersten, unteren Anlageabschnitt 12 gedrückt wird und wippenartig um die Kippkante 16 verschwenkt wird, bis der äußere Umfangsbereich 8 radial außenseitig zur abgestützten Anlage an dem zweiten, axial gegenüberliegenden oberen Anlageabschnitt 14 gelangt. Wenn ausgehend von dieser Stellung das Leitungsende 2a weiter in Einsteckrichtung X bewegt wird, erfolgt eine elastische Biegeverformung im Wesentlichen nur noch im Bereich der die Kippkante 16 radial nach innen überragenden Haltezähne 8a. Der Einsteckvorgang wird dann abgeschlossen, indem das Leitungsende 2a etwas gegen die Einsteckrichtung X zurückgezogen wird. Dadurch schneiden sich die Haltezähne 8a formschlüssig oder zumindest kraftformschlüssig in den Außenumfang des Leitungsendes 2a ein.

Vorteilhafterweise ist innerhalb der Aufnahmeöffnung 4 des Anschlusskörpers 6 eine Stützhülse 20 derart koaxial angeordnet, dass das Leitungsende 2a beim Einstecken auf eine zylindrische Außenfläche 22 der Stützhülse 20 aufschiebbar ist. Dadurch wird das eingesteckte Leitungsende 2a von der Stützhülse 20 radial abgestützt, so dass bei Beaufschlagung mit einer von dem Haltering 5 bewirkten radialen Haltekraft Verformungen der Rohrleitung 2 im Wirkbereich des Halterings 5 vermieden werden.

Bei der erfindungsgemäßen Anschlussvorrichtung 1 ist vorgesehen, dass der Anschlusskörper 6 ein axial zweigeteiltes Gehäuse mit einem ersten, stutzenartigen, in Einsteckrichtung weisenden Gehäuseteil 42 und einem zweiten, eine Mündungsseite der Aufnahmeöffnung 4 bildenden, hülsenförmigen Gehäuseteil 44 aufweist. Diese beiden Gehäuseteile 42, 44 sind miteinander verbunden bevorzugt über eine umfangsgemäß geschlossene Rastverbindung 46. In der dargestellten, bevorzugten Ausführung greift dazu das erste Gehäuseteil 42 mit einem Steckabschnitt 48 axial und radial formschlüssig in eine innere, nutartige Rastausnehmung 50 des zweiten Gehäuseteils 44 ein. Insbesondere wirken hierbei die Gehäuseteile 42, 44 auch zum Beispiel bereichsweise mit Press-Sitz zusammen, um eine Spaltabdichtung insbesondere als Schmutzdichtung zu gewährleisten. Das erste Gehäuseteil 42 kann als Einschraubstutzen mit einem Außengewindeansatz 52 ausgebildet sein.

Das erste Gehäuseteil 42 kann dabei in bekannter Weise einen Anschlussdorn endseitig aufweisen oder aber als Aufnahmeteil für eine lösbare Steckverbindung ausgebildet sein, wobei eine geradlinige oder eine abgerundete Ausbildung möglich ist.

Die oben beschriebene Kippkante 16 für den Haltering 5 kann mit Vorteil an einem Einsatzring 54 gebildet sein, der bevorzugt auch den ersten Anlageabschnitt 12 in Form einer radial nach außen an die Kippkante 16 angrenzenden, zur Längsachse Y senkrechten Stirnfläche aufweist. Die Kippkante 16 ist somit am Übergang zwischen der den ersten Anlageabschnitt 12 bildenden Stirnfläche und einer innen angrenzenden Konusfläche 56 gebildet.

Der Einsatzring 54 wird insbesondere mit Press-Sitz in den Anschlusskörper 6, und zwar bevorzugt in dessen zweites Gehäuseteil 44 eingesetzt und mit diesem gemeinsam im ersten Gehäuseteil 42 montiert. Hierbei ist insbesondere vorgesehen, dass der Einsatzring 54 innerhalb des Anschlusskörpers 6 mit einer in Einsteckrichtung weisenden Stirnfläche 58 gemeinsam mit einer dieser axial gegenüberliegenden Flankenfläche 60 des Anschlusskörpers 6 bzw. des ersten Gehäuseteils 42 eine Dichtungskammer 62 für die Rohr-Umfangssdichtung 10 begrenzt. Bei der Umfangsdichtung 10 handelt es sich bevorzugt um einen O-Ring, der für eine Anwendung bei Druckluft-Rohrleitungen vorzugsweise aus EPDM (Ethylen-Propylen-Dien-Monomer) oder NBR (Nitrile Butadiene Rubber = Nitril Katuschuk) besteht und für eine Anwendung bei Kraftstoff-Rohrleitungen aus einem Fluor-Elastomer.

Der Einsatzring 54 entkoppelt vorteilhafterweise die Bauräume für das Halteelement 5 einerseits und das Dichtelement 10 andererseits. Insbesondere in Kombination mit der Stützhülse 20 werden Exzentrizitäten und Ovalitäten der Rohrleitung 2 im Bereich zwischen Dichten und Halten vermieden bzw. kompensiert. Bevorzugt besteht der Einsatzring 54 aus einem Kunststoff, insbesondere POM ohne Glasfaserverstärkung, PBToder PA6.6, gegebenenfalls mit Glasfaser-Anteil GF30 %. Alternativ kann der Einsatzring 54 auch aus Metall, insbesondere Aluminium bestehen.

Für eine Lösbarkeit der eingesteckten und über den Haltering 5 fixierten Rohrleitung 2 ist ein hülsenförmiges Löseelement 70 vorgesehen. Dieses Löseelement 70 greift derart axial verschiebbar in den Anschlusskörper 6 ein, dass durch Einschieben des Löseelementes 70 in Einsteckrichtung X der Haltering 5 zur Freigabe des Leitungsendes 2a im Bereich der Haltezähne 8a elastisch verformbar ist. Dazu wirkt das Löseelement 70 mit Betätigungsabschnitten 72 gegen den Haltering 5, zum Beispiel gegen die Haltezähne 8a.

Das Löseelement 70 ist bevorzugt innerhalb des Anschlusskörpers 6 über eine Verrastung 74 gegen Demontage gehalten. Dazu weist das Löseelement 70 an seinem in Einsteckrichtung X weisenden Ende durch axiale Schlitze beabstandete Rastarme 76 auf, die einendig an einem umfangsgemäß geschlossenen Ringteil 71 angeformt sind, und die mit radial nach außen weisenden Rastnasen eine radiale Stufenfläche 78 (siehe Fig. 1) innerhalb des Anschlusskörpers 6 hintergreifen, wobei diese Stufenfläche 78 an dem zweiten hülsenförmigen Gehäuseteil 44 gebildet ist. In weiterer vorteilhafter Ausgestaltung sind die Rastarme 76 mit dem umfangsgemäß geschlossenen Ringteil 71 des Löseelementes 70 über scharnierartige Einschnürungen 80 verbunden, wodurch die radiale Beweglichkeit der Rastarme 76 begünstigt wird.

Weiterhin weist das Löseelement 70 im Bereich des Ringteils 71 einerseits eine äußere Umfangsdichtung 82 und andererseits eine innere Umfangsdichtung 84 auf. Die äußere Umfangsdichtung 82 dient zur Abdichtung eines Ringspaltes zwischen dem Ringteil 71 des hülsenförmigen Löseelementes 70 und dem Anschlusskörper 6 bzw. dessen zweitem Gehäuseteil 44. Die innere Umfangsdichtung 84 dichtet einen Ringspalt zwischen dem Ringteil 71 und dem Leitungsende 2a ab. Außerdem fungiert in bevorzugter Ausgestaltung die äußere Umfangsdichtung 82 auch als Federelement zur Erzeugung einer axialen Rückstellkraft für das Löseelement 70. Dazu wirkt die Umfangsdichtung 82 gegen eine innere, sich insbesondere konisch verengende Gegenfläche 86 innerhalb des Anschlusskörpers 6 bzw. des zweiten Gehäuseteils 44.

Vorteilhafterweise ist ein ringscheibenförmiges, deckelartiges Verschlusselement 88 zum Verschließen einer endseitig verbleibenden, die eingesteckte Rohrleitung 2 umschließenden ringförmigen Öffnung 4 vorgesehen. Gemäß Fig. 1 verschließt dieses Verschlusselement 88 auch eine Aufnahmeausnehmung für die innere Umfangsdichtung 84. Zudem kann das Verschlusselement 88 mit dem nicht dargestellten, axial nach außen vorstehenden Löseelement 70 über eine Rastverbindung verbunden sein.

Bei den gemäß Figuren 1 bis 7 dargestellten Ausführungsformen einer erfindungsgemäßen Anschlussvorrichtung ist im Bereich zwischen dem Halteelement 5 und der äußeren Umfangsdichtung 82 im Ringteil 71 des Löseelementes 70 innerhalb der Umfangswandung des zweiten Gehäuseteils 44 mindestens ein Durchgangskanal 90 ausgebildet, der einen Innenraum 91 des zweiten Gehäuseteils 44 mit dessen Außenseite verbindet und in einer Umfangsnut 92 des zweiten Gehäuseteils 44 mündet. Innerhalb der Umfangsnut 92 ist ein radial elastischer Dichtring 93 angeordnet. Erfindungsgemäß wird unter radialer Elastizität verstanden, dass sich durch Kraftausübung der Durchmesser des Dichtrings 93 vergrößern lässt. Darüber hinaus ist auch der Dichtring 93, was seinen Ringwulst betrifft, aus einem elastisch verformbaren Material. Der Durchgangskanal 90 besitzt eine Mündungsöffnung 94, wobei erfindungsgemäß der Durchgangskanal unmittelbar oder mittelbar durch den Dichtring 93 abgedichtet ist. Der Dichtring 93 ist derart ausgebildet, dass, wenn die anzuschließende Rohrleitung 2 nur teilweise derart eingesteckt ist, dass keine umfangsgemäße Abdichtung der Rohrleitung durch die Umfangsdichtung 10 im Bereich des ersten Gehäuseteils 42 vorhanden ist, durch einen sich im Innern, d. h. im Innenraum 91 der Anschlussvorrichtung 1 aufbauender Innendruck eines im Innern vorhandenen Fluids der Dichtring 93 derart abhebt, dass eine Abdichtung der Mündungsöffnung 94 aufgehoben wird. Die Aufhebung der Abdichtung der Mündungsöffnung kann dauerhaft oder aber auch pulsierend sein. Eine derartige Leckagestellung mit nicht voll eingesteckter Rohrleitung 2 ist in Fig. 2, 2a dargestellt.

In Fig. 1 ist eine mögliche Ausführungsform der Ausbildung der Umfangsnut 92 und des Dichtrings 93 dargestellt, bei der der Dichtring 93 auf einem Nutgrund der Umfangsnut 92 aufliegt, so dass hierdurch die Mündungsöffnung 94 des Durchgangskanals 90 unmittelbar geschlossen wird. Im Falle eines Überdrucks im Innenraum 91, wenn die Rohrleitung 2 nur teilweise eingesteckt ist, bewirkt der sich in den Durchgangskanal 90 erstreckende Überdruck ein Anheben des Dichtrings 93, siehe Fig. 2, aufgrund einer radialen Weitung vom Nutgrund im Bereich der Mündungsöffnung 94 und damit eine Öffnung der Mündungsöffnung 94, so dass das im Innenraum befindliche Druck-Fluid über den Durchgangskanal 90 nach außen abfließen kann. Hierbei entsteht ein Pfeif- bzw. Zischgeräusch, wodurch dann erkennbar ist, dass die Rohrleitung 2 mit ihrem Leitungsende 2a nicht vollständig eingesteckt ist, und zwar derart weit eingesteckt ist, dass sie an ihrem Umfang nicht durch die Umfangsdichtung 10 abgedichtet werden kann. Damit wird erfindungsgemäß ein Leckagepfad ausgebildet und der Anwender kann sofort feststellen, dass die Rohrleitung nicht ordnungsgemäß eingesteckt ist. Somit kann eine fehlerhafte Verbindungsstelle im Druckluftsystem bei einer Druckprüfung schnellstmöglich gefunden und behoben werden. Bei dieser Ausführungsform ist es ebenfalls möglich, dass mehrere, d. h. beispielsweise zwei Durchgangskanäle 90 in der Umfangswandung des zweiten Gehäuseteils ausgebildet sind.

Vorteilhafterweise verläuft der Durchgangskanal 90 oder im Falle von mehreren Durchgangskanälen 90 die Durchgangskanäle 90 senkrecht zu einer mittleren Längsachse Y-Y des Anschlusskörpers 6. Hierdurch ergibt sich eine leichtere Entformbarkeit. Weiterhin ist es vorteilhaft, wenn der Durchgangskanal 90 im Querschnitt zu seiner Längsachse kreisförmig ausgebildet ist. Ein schräger Verlauf des Durchgangskanals 90 ist aber ebenfalls realisierbar. Vorteilhafterweise ist die Umfangsnut 92 im Längsschnitt, d. h. im Schnitt in Richtung der mittleren Längsachse Y-Y des hülsenförmigen Gehäuseteils 44, in der Form eines gleichseitigen Trapezes ausgebildet, wobei die lange Trapezseite die offene Seite der Umfangsnut 92 bildet. Bei der Ausführungsform gemäß Fig. 1 ist die Breite des Nutgrundes derart dimensioniert, dass der unter Vorspannung anliegende Dichtring 93 umfangsgemäß komprimiert ist, so dass eine sichere Abdichtung erreicht wird. Vom Nutgrund ausgehend erweitert sich dann die Umfangsnut 92 trichterförmig. Hierdurch ergibt sich insgesamt im Längsschnitt gesehen die Trapezform der Umfangsnut 92. Im geschlossenen Zustand der Mündungsöffnung 94 des Durchgangskanals 90 wirkt der Dichtring 93 als Schmutzdichtung, so dass von außen kein Schmutz und auch keine Flüssigkeit in den Durchgangskanal 90 und somit in den Innenraum 91 eindringen können.

Für die Ausbildung des Durchgangskanals 90 ist es vorteilhaft, wenn dieser dort ausgebildet wird, wo die maximale Wandstärke des zweiten Gehäuseteils 44 vorhanden ist. Dies ist - wie in Fig. 1 zu erkennen ist - im Bereich der radialen Stufenfläche 78, hinter der die Rastarme 76 des Löseelementes 70 rastend hintergreifen.

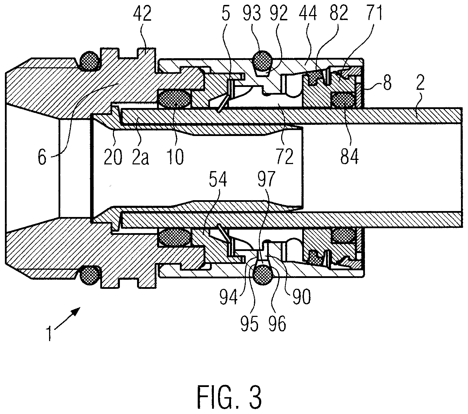

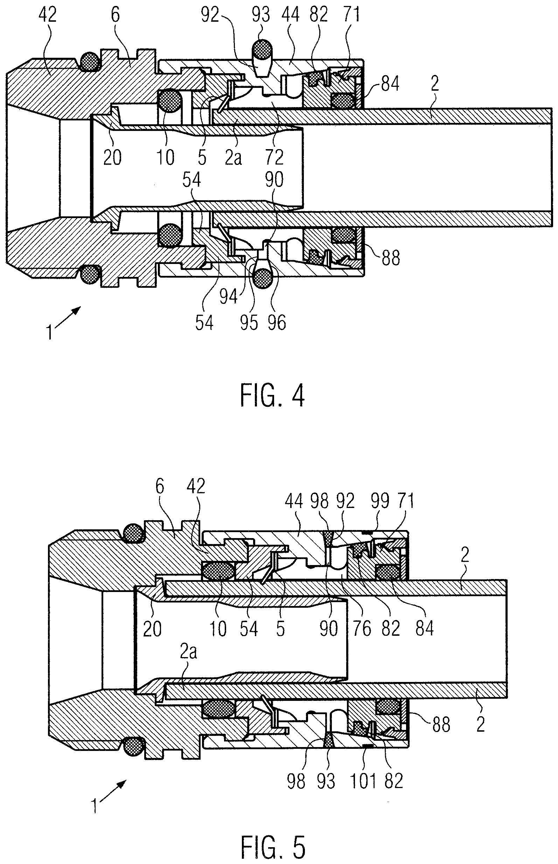

In den Figuren 3 und 4 ist eine weitere Ausgestaltung einer erfindungsgemäßen Anschlussvorrichtung 1 gezeigt. Hierbei sind gleiche Teile wie in der Figur 1 mit denselben Bezugsziffern gekennzeichnet. In der Figur 3 ist die vollständig eingesteckte Stellung der Rohrleitung 2 innerhalb der Anschlussvorrichtung 1 dargestellt. Auch bei dieser Ausführungsform ist ein Durchgangskanal 90 vorhanden, der in der Umfangsnut 92 mit seiner Mündungsöffnung 94 endet. Im Unterschied zu der Ausführungsform gemäß Fig. 1 ist dabei jedoch die Umfangsnut 92 und der Dichtring 93 derart dimensioniert, dass der Dichtring nicht auf dem Nutgrund der Umfangsnut 92 aufliegt, sondern er lediglich an den beiden gegenüberliegenden Seitenflächen 95, 96 der Umfangsnut 92 dichtend anliegt, so dass zwischen dem Nutgrund der Umfangsnut 92 und dem Dichtring 93 ein umfangsgemäß verlaufender Kanal 97 ausgebildet ist. Bei dieser Ausführungsform ist zweckmäßigerweise nur ein einziger Durchgangskanal 90 vorhanden, der den Innenraum 91 mit dem Kanal 97 verbindet. Der Durchgangskanal 90 verläuft vorteilhafterweise senkrecht zur mittleren Längsachse Y-Y. Er kann aber auch schräg hierzu verlaufen.

In Fig. 4 ist nun die nicht vollständig gesteckte Stellung der Rohrleitung 2 in der Anschlussvorrichtung 1 gemäß Fig. 3 dargestellt. Hier ist zu erkennen, dass aufgrund des sich im Innenraum 91 aufbauenden Drucks des durch die Rohrleitung 2 in den Innenraum 91 eingeführten Fluidmediums, insbesondere beispielsweise von Druckluft, der sich in den Kanal 97 fortsetzt, der radial elastische Dichtring 93 sich partiell dem Mündungsbereich des Durchgangskanals 90 radial gegenüberliegend aufweitet und dort die Dichtungswirkung des Dichtrings 93 aufgehoben wird. Hierbei fließt das Fluidmedium ausgehend von der Mündung des Durchgangskanals 90 gleichmäßig umfangsgemäß nach beiden Seiten durch den Kanal 97, und der Dichtring 93 hebt an der Stelle ab, an der die beiden Fluidströme aufeinandertreffen, und zwar dem Durchgangskanal 90 gegenüberliegend. Hierdurch wird auch ein Vibrieren des Dichtrings 93 erzeugt. Hierbei hebt der Dichtring 93 von den Seitenflächen 95, 96 ab, so dass das im Innenraum befindliche Fluid nach außen abfließen kann und hierbei ein deutliches Leckagegeräusch durch Zischen oder dergleichen erzeugt wird. Im Übrigen stimmt die Ausführung der Anschlussvorrichtung gemäß Fig. 3 und 4 mit der Ausführung gemäß Fig. 1 und 2 überein.

In den Figuren 5 bis 7 ist eine weitere Ausgestaltung einer erfindungsgemäßen Anschlussvorrichtung 1 dargestellt, wobei gleiche Teile wie in den Figuren 1 bis 4 mit denselben Bezugsziffern versehen sind. Bei dieser Ausgestaltung sind das zweite hülsenförmige Gehäuseteil 44 und der Dichtring 93 als Zwei-Komponenten-Bauteil ausgebildet, welches in einem Montagespritzgussverfahren hergestellt ist. Hierbei wird der Dichtring 93 als zweite Komponente auf das zweite Gehäuseteil 44 angespritzt, und zwar derart, dass er in der Umfangsnut 92 des zweiten Gehäuseteils 44, der so genannten Haltekappe, eingespritzt ist.

Gemäß der Erfindung sind als Material für die Haltekappe bzw. das zweite Gehäuseteil 44 vorzugsweise PA12, PA11, POM, PA66, PBT mit oder ohne Glasfaserverstärkung vorgesehen. Für den O-Ring sind Elastomere, wie modifiziertes EPDM oder NBR, als Materialien vorgesehen, d. h. Materialien, die nicht auf dem Material der Kappe haften. Vorteilhafterweise sind an dem Dichtring 93 an seiner der Umfangsnut 92 zugekehrten Seite mindestens ein, vorzugsweise zwei in radialer Richtung in Richtung auf die mittlere Längsachse Y-Y ausgebildete Nocken 98 vorhanden. Der jeweilige Nocken 98 ragt dabei in den Durchgangskanal 90 hinein und dichtet diesen ab. Im Falle von der Ausbildung von zwei Nocken 98 sind diese zweckmäßigerweise um 180° zueinander versetzt am Dichtring 93 ausgebildet. Bei dieser Ausführungsform des Dichtrings 93 besitzt dieser zweckmäßigerweise einen rechteckförmigen Querschnitt und die Umfangsnut 92 ist ebenfalls im Querschnitt rechteckig ausgebildet, so dass der Dichtring 93 vollständig in der Umfangsnut aufgenommen werden kann. Die Abdichtung des Durchgangskanals 90 erfolgt ausschließlich über die Nocken 98, wobei der Durchgangskanal 90 im Längsschnitt gesehen trichterförmig ausgebildet ist und die Nocken 98 eine angepasste Gegen-Kontur besitzen, wobei die Abmessungen des Durchgangskanals 90 und der Nocken 98 derart aufeinander abgestimmt sind, dass die Nocken 98 unter elastischer Verformung in den Durchgangskanal 90 mittels des Dichtrings 93 hineingedrückt werden. Weiterhin ist es bei dieser Ausführungsform zweckmäßig, wenn am Umfang des zweiten Gehäuseteils 44 parallel zu der den Dichtring 93 aufnehmenden Umfangsnut 92 eine zweite umfängliche Positionierungsnut 99 ausgebildet ist. In dieser Positionierungsnut 99 ist ein Positionierungsring 101 ebenfalls aus dem zweiten Komponentenmaterial gleichzeitig mit dem Dichtring 93 aufgespritzt. Hierbei sind der Dichtring 93 und der Positionierungsring 101 durch mindestens einen Verbindungssteg 102, vorzugsweise zwei Verbindungsstege 102, miteinander verbunden. Zur Aufnahme der Verbindungsstege 102 sind im zweiten Gehäuseteil 44 entsprechende Aufnahmenuten vorhanden. Die Verbindungsstege 102 können beispielsweise V-förmig ausgebildet sein. Der Positionierungsring 101 dient insbesondere dazu, dass die Nocken 98, die als Stopfen wirken, und die den Leckagepfad innerhalb des Durchgangskanals 90 abdichten, immer wieder in ihre dichtende Position zurückgeführt werden. Durch den Positionierungsring 101 wird die Rückstellkraft insgesamt erhöht sowie die Positionierung des Dichtrings 93 gesichert. Der Positionierungsring 101 stellt ein axiales Positionierungselement für die gesamte Dichtungseinrichtung dar. Es ist vorteilhaft, den Dichtring 93 derart farblich zu gestalten, dass sein Abheben optisch besser erkennbar ist.

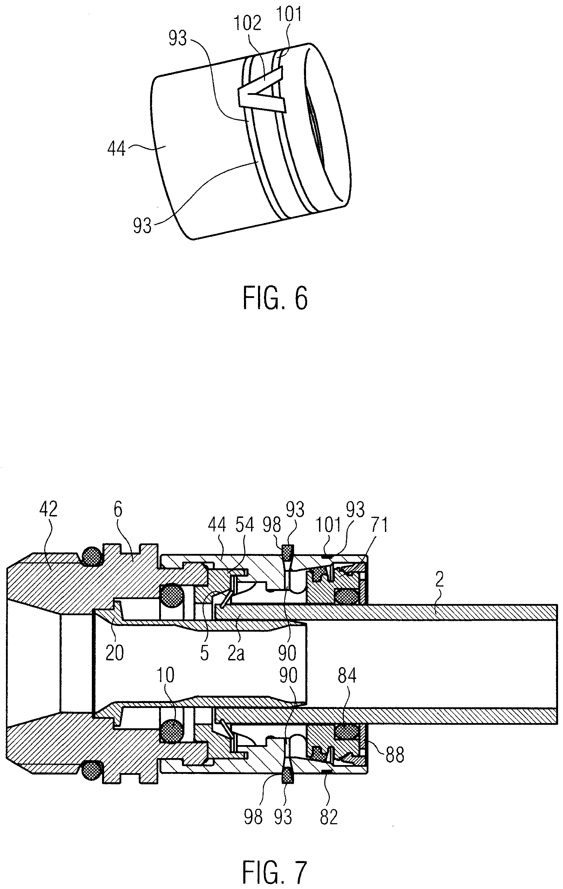

Liegt ein innerer Überdruck im System, d. h. innerhalb der Anschlussvorrichtung 1 vor, da die Rohrleitung nicht vollständig eingesteckt ist, wie dies in Fig. 7 dargestellt ist, werden die Nocken 98 aus ihrem Dichtsitz innerhalb des jeweiligen Durchgangskanals 90 gedrückt und geben so einen Leckagepfad frei, und das austretende Medium erzeugt dabei ein eindeutiges Leckagegeräusch, beispielsweise in Form eines Zisch- oder Pfeiftons.

Die in den Figuren 5 bis 7 dargestellte Anschlussvorrichtung stimmt im Übrigen in der Ausführung mit den in den Figuren 1 bis 4 gezeigten Ausführungen überein.

Die Erfindung ist nicht auf die dargestellten und beschriebenen Ausführungsbeispiele beschränkt, sondern umfasst auch alle im Sinne der Erfindung gleichwirkenden Ausführungen solange sie durch die Ansprüche abgedeckt sind.

### Bezugszeichenliste

- 1: Anschlussvorrichtung
- 2: Rohrleitung
- 2a: Leitungsende
- 4: Aufnahmeöffnung
- 5: Halteelement
- 6: Anschlusskörper
- 8: Äußerer Umfangsbereich
- 8a: Haltezähne
- 10: Umfangsdichtung
- 12: Anlageabschnitt
- 14: Anlageabschnitt
- 16: Kippkante
- 20: Stützhülse
- 22: Außenfläche
- 42: Erstes Gehäuseteil
- 44: Zweites Gehäuseteil
- 48: Steckabschnitt
- 50: Rastausnehmung
- 52: Außengewindeansatz
- 54: Einsatzring
- 58: Stirnfläche
- 60: Flankenfläche
- 62: Dichtungskammer
- 70: Löseelement
- 71: Ringteil
- 72: Betätigungsabschnitt
- 74: Verrastung
- 76: Rastarme
- 78: Stufenfläche
- 80: Einschnürungen
- 82: Äußere Umfangsdichtung
- 84: Innere Umfangsdichtung
- 86: Gegenfläche
- 88: Verschlusselement
- 90: Durchgangskanal
- 91: Innenraum
- 92: Umfangsnut
- 93: Dichtring
- 94: Mündungsöffnung
- 95: Seitenfläche
- 96: Seitenfläche
- 97: Kanal
- 98: Nocken
- 99: Positionierungsnut
- 101: Positionierungsring
- 102: Verbindungssteg
- X: Steckrichtung
- Y-Y: Längsachse

## Patentansprüche

1. Anschlussvorrichtung (1) für Rohrleitungen (2) mit einem Anschlusskörper (6) mit einer Aufnahmeöffnung (4) für eine mit einem Leitungsende (2a) einzusteckende Rohrleitung (2) und ein innerhalb der Aufnahmeöffnung (4) gelagertes Halteelement (5) zum Fixieren des eingesteckten Leitungsendes (2a) gegen Herausziehen, wobei der Anschlusskörper (6) ein axiales zweigeteiltes Gehäuse mit einem ersten, in Einsteckrichtung weisenden Gehäuseteil (42) und einem zweiten, eine Mündungsseite der Aufnahmeöffnung (4) aufweisenden hülsenförmigen Gehäuseteil (44) aufweist, die miteinander verbunden sind, wobei innerhalb des hülsenförmigen Gehäuseteils (44) ein hülsenförmiges Löseelement (70) derart axial verschiebbar gelagert ist, dass durch Einwirken auf das Halteelement (5) die Fixierung der eingesteckten Rohrleitung (2) aufgehoben wird, wobei das Löseelement (70) aus einem umfangsgemäß geschlossenen Ringteil (71) besteht, an dem durch Längsschlitze voneinander getrennte Rastarme ausgebildet sind, wobei das Ringteil (71) an seinem äußeren Umfang mittels einer Umfangsdichtung (82) gegen das zweite hülsenförmige Gehäuseteil (44) und an seinem inneren Umfang im Bereich seiner Ringöffnung mittels einer Umfangsdichtung (84) gegen die eingesteckte Rohrleitung (2) abdichtbar ist,
**dadurch gekennzeichnet, dass** im Bereich zwischen dem Halteelement (5) und der äußeren Umfangsdichtung (82) des Ringteils (71) innerhalb der Umfangswandung des zweiten hülsenförmigen Gehäuseteils (44) mindestens ein Durchgangskanal (90) ausgebildet ist, der einen Innenraum (91) des zweiten Gehäuseteils (44) mit dessen Außenseite verbindet und in einer Umfangsnut (92) mündet, wobei innerhalb der Umfangsnut (92) ein radial elastischer Dichtring (93) angeordnet ist, der eine Mündungsöffnung des Durchgangskanals (90) unmittelbar oder mittelbar abdichtet, wobei der Dichtring (93) derart ausgebildet ist, dass ein im Innern der Anschlussvorrichtung (1) sich aufbauender Innendruck eines im Innern vorhandenen Fluids, wenn die anzuschließende Rohrleitung (2) nur teilweise derart eingesteckt ist, dass keine umfangsgemäße Abdichtung der Rohrleitung (2) im Bereich des ersten Gehäuseteils (42) vorhanden ist, den Dichtring (93) derart anhebt, dass eine Abdichtung des Durchgangskanals (90) aufgehoben wird.

2. Anschlussvorrichtung nach Anspruch 1,
**dadurch gekennzeichnet, dass** der Durchgangskanal (90) senkrecht oder schräg zu einer mittleren Längsachse (Y-Y) des Anschlusskörpers (6) verläuft.

3. Anschlussvorrichtung nach Anspruch 1 oder 2,
**dadurch gekennzeichnet, dass** der Durchgangskanal (90) im Querschnitt zu seiner Längsachse kreisförmig ausgebildet ist.

4. Anschlussvorrichtung nach einem der Ansprüche 1 bis 3,
**dadurch gekennzeichnet, dass** die Umfangsnut (92) im Längsschnitt in Richtung der mittleren Längsachse des hülsenförmigen Gehäuseteils (44) die Form eines Trapezes hat, wobei die längere Grundseite des Trapezes die offene Seite der Umfangsnut (92) bildet.

5. Anschlussvorrichtung nach einem der Ansprüche 1 bis 4,
**dadurch gekennzeichnet, dass** der Dichtring (93) und die Umfangsnut (92) derart aufeinander in ihrer Größe abgestimmt sind, dass der Dichtring (93) im Bereich des Nutgrundes aufliegt und eine Mündungsöffnung (94) des Durchgangskanals (90) unmittelbar verschließt.

6. Anschlussvorrichtung nach einem der Ansprüche 1 bis 5,
**dadurch gekennzeichnet, dass** der Dichtring (93) und die Umfangsnut (92) derart aufeinander in ihrer Größe abgestimmt sind, dass der Dichtring (93) im Bereich der Nutseitenflächen dichtend aufliegt und unterhalb des Dichtring (93) ein umlaufender Kanal (97) ausgebildet ist, so dass der Durchgangskanal (90) mittelbar abgedichtet ist.

7. Anschlussvorrichtung nach Anspruch 1 oder 2,
**dadurch gekennzeichnet, dass** das zweite hülsenförmige Gehäuseteil (44) und der Dichtring (93) als Zwei-Komponenten-Spritzgussteil ausgebildet sind, wobei der Dichtring (93) in die Umfangsnut (92) aufgespritzt ist.

8. Anschlussvorrichtung nach Anspruch 7,
**dadurch gekennzeichnet, dass** der Dichtring (93) zumindest einen in radialer Richtung zur mittleren Längsachse des zweiten Gehäuseteils (44) verlaufenden Nocken (98) aufweist, der in den Durchgangskanal (90) unmittelbar dichtend hineinragt.

9. Anschlussvorrichtung nach Anspruch 8,
**dadurch gekennzeichnet, dass** an dem Dichtring (93) zwei um 180° zueinander versetzt angeordnete Nocken (98) ausgebildet sind, die in zwei Durchgangskanäle (90) des zweiten Gehäuseteils (44) dichtend hineinragen.

10. Anschlussvorrichtung nach Anspruch 8 oder 9,
**dadurch gekennzeichnet, dass** am Umfang des zweiten Gehäuseteils (44) parallel zur Umfangsnut (92) zur Aufnahme des Dichtrings (93) eine zweite umfänglich verlaufende Positionierungsnut (99) ausgebildet ist, in die ein Positionierungsring (101) aufgespritzt ist, und der Dichtring (93) und der Positionierungsring (101) durch mindestens einen Verbindungssteg (102) miteinander verbunden sind, wobei der jeweilige Verbindungssteg (102) in einer Verbindungsnut zwischen der Umfangsnut (92) und der Positionierungsnut (99) aufgespritzt ist.

11. Anschlussvorrichtung nach Anspruch 10,
**dadurch gekennzeichnet, dass** zwei diametral gegenüberliegende Verbindungsstege (102) ausgebildet sind.

## Claims

1. Connection device (1) for pipelines (2), having a connection body (6) with an accommodating opening (4) for a pipeline (2), which is to be inserted by way of one line end (2a), and a retaining element (5), which is mounted within the accommodating opening (4) and is intended for fixing the inserted line end (2a) against being pulled out, wherein the connection body (6) has an axial two-part housing with a first housing part (42), which is oriented in the insertion direction, and a second, sleeve-form housing part (44), which has a mouth-opening side of the accommodating opening (4), said two housing parts being connected to one another, wherein a sleeve-form release element (70) is mounted in an axially displaceable manner within the sleeve-form housing part (44) such that action on the retaining element (5) disengages the fixing of the inserted pipeline (2), wherein the release element (70) comprises a circumferentially closed annular part (71), on which are formed latching arms which are separated from one another by longitudinal slits, wherein the annular part (71) can be sealed on its outer circumference, by means of a circumferential seal (82), against the second, sleeve-form housing part (44) and can be sealed on its inner circumference in the region of its annular opening, by means of a circumferential seal (84), against the inserted pipeline (2),
**characterized by** the formation in the region between the retaining element (5) and the outer circumferential seal (82) of the annular part (71), within the circumferential wall of the second, sleeve-form housing part (44), of at least one through-passage channel (90), which connects an interior (91) of the second housing part (44) to the outer side thereof and opens out in a circumferential groove (92), wherein a radially elastic sealing ring (93) is arranged within the circumferential groove (92) and seals a mouth opening of the through-passage channel (90) directly or indirectly, wherein the sealing ring (93) is designed such that, if the pipeline (2) which is to be connected has been inserted only to some extent such that there is no circumferential sealing of the pipeline (2) in the region of the first housing part (42), an internal pressure of an internally contained fluid, said internal pressure building up in the interior of the connection device (1), raises the sealing ring (93) such that sealing of the through-passage channel (90) is disengaged.

2. Connection device according to Claim 1,
**characterized in that** the through-passage channel (90) runs perpendicularly or obliquely in relation to a central longitudinal axis (Y-Y) of the connection body (6).

3. Connection device according to Claim 1 or 2,
**characterized in that**, as seen in cross section in relation to its longitudinal axis, the through-passage channel (90) is of circular design.

4. Connection device according to one of Claims 1 to 3,
**characterized in that**, as seen in longitudinal section in the direction of the central longitudinal axis of the sleeve-form housing part (44), the circumferential groove (92) is in the form of a trapezium, wherein the longer base of the trapezium forms the open side of the circumferential groove (92) .

5. Connection device according to one of Claims 1 to 4,
**characterized in that** the sealing ring (93) and the circumferential groove (92) are coordinated with one another in terms of their size such that the sealing ring (93) rests in the region of the groove base and closes a mouth opening (94) of the through-passage channel (90) directly.

6. Connection device according to one of Claims 1 to 5,
**characterized in that** the sealing ring (93) and the circumferential groove (92) are coordinated with one another in terms of their size such that the sealing ring (93) rests with sealing action in the region of the groove side surfaces and an encircling channel (97) is formed beneath the sealing ring (93), the through-passage channel (90) therefore being sealed indirectly.

7. Connection device according to Claim 1 or 2,
**characterized in that** the second, sleeve-form housing part (44) and the sealing ring (93) are designed in the form of a two-component injection moulding, wherein the sealing ring (93) is injection moulded into the circumferential groove (92).

8. Connection device according to Claim 7,
**characterized in that** the sealing ring (93) has at least one protuberance (98), which runs in the radial direction in relation to the central longitudinal axis of the second housing part (44) and projects with direct sealing action into the through-passage channel (90).

9. Connection device according to Claim 8,
**characterized by** the formation, on the sealing ring (93), of two protuberances (98), which are arranged offset in relation to one another through 180° and project with sealing action into two through-passage channels (90) of the second housing part (44).

10. Connection device according to Claim 8 or 9,
**characterized by** the formation on the circumference of the second housing part (44), parallel to the circumferential groove (92) for accommodating the sealing ring (93), of a second circumferentially running positioning groove (99), into which a positioning ring (101) is injection moulded, and the sealing ring (93) and the positioning ring (101) are connected to one another by at least one connecting crosspiece (102), wherein the respective connecting crosspiece (102) is injection moulded in a connecting groove between the circumferential groove (92) and the positioning groove (99).

11. Connection device according to Claim 10,
**characterized by** the formation of two diametrically opposite connecting crosspieces (102).

## Revendications

1. Dispositif de raccordement (1) pour des canalisations (2), comprenant un corps de raccordement (6) muni d'une ouverture de réception (4) pour une canalisation (2) à insérer par une extrémité de canalisation (2a) et un élément de retenue (5) monté à l'intérieur de l'ouverture de réception (4) pour la fixation de l'extrémité de canalisation insérée (2a) contre un retrait, le corps de raccordement (6) comprenant un boîtier axial en deux parties comprenant une première partie de boîtier (42) orientée dans la direction d'insertion et une deuxième partie de boîtier (44) en forme de manchon comprenant un côté embouchure de l'ouverture de réception (4), qui sont reliées l'une à l'autre, un élément de libération (70) en forme de manchon étant monté en coulissement axial à l'intérieur de la partie de boîtier (44) en forme de manchon de manière à supprimer la fixation de la canalisation insérée (2) en agissant sur l'élément de retenue (5), l'élément de libération (70) étant constitué par une partie annulaire (71) fermée en périphérie, sur laquelle des bras d'encliquetage séparés les uns des autres par des fentes longitudinales sont formés, la partie annulaire (71) pouvant être étanchéifiée au niveau de sa périphérie extérieure vis-à-vis de la deuxième partie de boîtier (44) en forme de manchon au moyen d'un joint d'étanchéité périphérique (82) et au niveau de sa périphérie intérieure dans la zone de son ouverture annulaire vis-à-vis de la canalisation insérée (2) au moyen d'un joint d'étanchéité périphérique (84),
**caractérisé en ce qu'**au moins un canal de passage (90) est réalisé dans la zone entre l'élément de retenue (5) et le joint d'étanchéité périphérique extérieur (82) de la partie annulaire (71) à l'intérieur de la paroi périphérique de la deuxième partie de boîtier (44) en forme de manchon, lequel canal de passage relie un espace intérieur (91) de la deuxième partie de boîtier (44) à son côté extérieur et débouche dans une rainure périphérique (92), une bague d'étanchéité (93) élastique radialement étant disposée à l'intérieur de la rainure périphérique (92), laquelle bague étanchéifie directement ou indirectement une ouverture d'embouchure du canal de passage (90), la bague d'étanchéité (93) étant réalisée de telle sorte que, lorsque la canalisation (2) à raccorder n'est que partiellement insérée de telle sorte qu'aucune étanchéité en périphérie de la canalisation (2) n'est présente dans la zone de la première partie de boîtier (42), une pression interne, s'établissant à l'intérieur du dispositif de raccordement (1), d'un fluide présent à l'intérieur soulève la bague d'étanchéité (93) de telle sorte qu'une étanchéité du canal de passage (90) est supprimée.

2. Dispositif de raccordement selon la revendication 1,
**caractérisé en ce que** le canal de passage (90) s'étend de manière perpendiculaire ou oblique par rapport à un axe longitudinal central (Y-Y) du corps de raccordement (6) .

3. Dispositif de raccordement selon la revendication 1 ou 2,
**caractérisé en ce que** le canal de passage (90) est réalisé de manière circulaire en section transversale par rapport à son axe longitudinal.

4. Dispositif de raccordement selon l'une quelconque des revendications 1 à 3,
**caractérisé en ce que** la rainure périphérique (92) présente la forme d'un trapèze en coupe longitudinale dans la direction de l'axe longitudinal central de la partie de boîtier (44) en forme de manchon, le côté de base plus long du trapèze formant le côté ouvert de la rainure périphérique (92).

5. Dispositif de raccordement selon l'une quelconque des revendications 1 à 4,
**caractérisé en ce que** la bague d'étanchéité (93) et la rainure périphérique (92) sont adaptées l'une à l'autre en termes de dimension de telle sorte que la bague d'étanchéité (93) repose dans la zone du fond de rainure et ferme directement une ouverture d'embouchure (94) du canal de passage (90).

6. Dispositif de raccordement selon l'une quelconque des revendications 1 à 5,
**caractérisé en ce que** la bague d'étanchéité (93) et la rainure périphérique (92) sont adaptées l'une à l'autre en termes de dimension de telle sorte que la bague d'étanchéité (93) repose de manière étanche dans la zone des faces latérales de rainure et qu'un canal périphérique (97) est réalisé en dessous de la bague d'étanchéité (93), de sorte que le canal de passage (90) est étanchéifié indirectement.

7. Dispositif de raccordement selon la revendication 1 ou 2,
**caractérisé en ce que** la deuxième partie de boîtier (44) en forme de manchon et la bague d'étanchéité (93) sont réalisées sous forme de pièce moulée par injection à deux composants, la bague d'étanchéité (93) étant moulée par injection dans la rainure périphérique (92).

8. Dispositif de raccordement selon la revendication 7,
**caractérisé en ce que** la bague d'étanchéité (93) comprend au moins une came (98) s'étendant dans la direction radiale par rapport à l'axe longitudinal central de la deuxième partie de boîtier (44), laquelle came pénètre de manière directement étanche dans le canal de passage (90) .

9. Dispositif de raccordement selon la revendication 8,
**caractérisé en ce que** deux cames (98) décalées l'une par rapport à l'autre de 180° sont réalisées sur la bague d'étanchéité (93), lesquelles cames pénètrent de manière étanche dans deux canaux de passage (90) de la deuxième partie de boîtier (44).

10. Dispositif de raccordement selon la revendication 8 ou 9,
**caractérisé en ce qu'**une deuxième rainure de positionnement (99) s'étendant de manière périphérique est réalisée sur la périphérie de la deuxième partie de boîtier (44) parallèlement à la rainure périphérique (92) servant à la réception de la bague d'étanchéité (93), rainure de positionnement dans laquelle une bague de positionnement (101) est moulée par injection, et la bague d'étanchéité (93) et la bague de positionnement (101) sont reliées l'une à l'autre par au moins une nervure de liaison (102), la nervure de liaison (102) respective étant moulée par injection dans une rainure de liaison entre la rainure périphérique (92) et la rainure de positionnement (99).

11. Dispositif de raccordement selon la revendication 10,
**caractérisé en ce que** deux nervures de liaison (102) diamétralement opposées sont réalisées.
